# EUROPÄISCHE PATENTSCHRIFT

(11) **EP 0 737 305 B1**
(45) Veröffentlichungstag und Bekanntmachung des Hinweises auf die Patenterteilung: **22.08.2001**
(21) Anmeldenummer: 95903752.4
(22) Anmeldetag: 14.12.1994
(51) Int. Cl.: G01L 21/16

(54) **Gasreibungsvakuummeter mit horizontaler Rotationsachse und Neigungsmesser**
Gas friction vacuum gauge with horizontal spinning axis and inclination meter
Indicateur de vide à frottement de gaz avec un axe de rotation horizontal et un appareil de mesure d'inclinaison

(30) Priorität: 21.12.1993 DE 4343575
(43) Veröffentlichungstag der Anmeldung: 16.10.1996
(73) Patentinhaber: FORSCHUNGSZENTRUM JÜLICH GMBH, 52425 Jülich (DE)
(72) Erfinder: LINDENAU, Bernd, D-52428 Jülich (DE); FREMEREY, Johan, K., D-53129 Bonn (DE); WITTHAUER, Klaus, D-52076 Aachen (DE)
(86) Internationale Anmeldenummer: DE9401482
(87) Internationale Veröffentlichungsnummer: WO9517654

(56) Entgegenhaltungen:
- EP-A- 0 176 735
- JOURNAL OF VACUUM SCIENCE & TECHNOLOGY, Bd.A4, Nr.3, Mai 1986, NY , USA Seiten 1724 - 1727 MM.HIRATA ET AL. 'Effect of measuring conditions on the accuracy of a spinning rotor gauge'

## Beschreibung

Die Erfindung bezieht sich auf ein Gasreibungsvakuummeter mit einem um eine ortsfeste Rotationsachse rotierendem Gasreibungssensor. Der Gasreibungssensor ist innerhalb einer evakuierbaren Meßkammer magnetisch berührungslos gelagert. Das hierzu erforderliche Magnetfeld ist in Bezug auf die Rotationsachse des Gasreibungssensors rotationssymmetrisch ausgebildet und regelbar. Mit dem Vakuumraum, dessen Vakuum zu messen ist, steht die Meßkammer bei der Druckmessung räumlich in Verbindung.

Gasreibungsvakuummeter mit magnetisch gelagertem, rotierendem Gasreibungssensor sind bekannt, siehe beispielsweise DE 33 34 750 C2. Zur Vakuummmessung wird bei diesen Druckmeßgeräten die durch den Aufprall von Molekülen auf den Gasreibungssensor erzeugte Abbremsung der Sensorrotation bestimmt, wobei die Abbremsung pro Zeiteinheit umso geringer ist, je niedriger der Druck bzw. je besser das zu messende Vakuum ist. In DE 34 31 517 C2 wird ein Gasreibungsvakuummeter beschrieben, dessen Druckmeßwert temperaturkorreliert ist, um bei einer Vakuummessung oberhalb eines Druckes von 0,1 mbar die von der Viskosität beeinflußte Gasreibung zu korrigieren.

Der konstruktive Aufbau der bisher bekannten Gasreibungsvakuummeter macht es bisher jedoch erforderlich, die Meßkammerachse, die der Rotationsachse des Gasreibungssensors entspricht, möglichst exakt vertikal auszurichten, sollen Ungenauigkeiten bei der Anzeige des gemessenen Vakuums vermieden werden.

Aufgabe der Erfindung ist es, ohne erhöhten Konstruktionsaufwand auch eine von der Horizontalen abweichende Meßkammerachse zuzulassen und die sich dadurch ergebenden Meßfehler auszugleichen.

Diese Aufgabe wird gemäß der Erfindung bei einem Gasreibungsvakuummeter der eingangs erwähnten Art durch die in Patentanspruch 1 angebenen Merkmale gelöst. Mit Hilfe einer die Neigung der Rotationsachse gegen die Vertikale messenden Meßeinrichtung wird die real gegebene Ausrichtung der Rotationsachse bestimmt und das Ausgangssignal der Meßeinrichtung einer den Meßwert bestimmenden Recheneinheit aufgegeben, die den aufgrund der gegebenen Achslage verfälschten Meßwert korrigiert und den Druckmeßwert zur Anzeige bringt, der der Rotationsabbremsung des Gasreibungssensors infolge des tatsächlich vorhandenen Vakuums entspricht. Die der Recheneinheit aufgegebene Korrekturgröße läßt sich basierend auf der Proportionalität zwischen dem Quadrat des Sinus des Winkels zwischen der Vertikalen und der gegebenen Ausrichtung der Rotationsachse einerseits und der sich andererseits bei einer Neigung der Rotationsachse einstellenden wirbelstrombedingten Abbremsung des Gasreibungssensors - zusätzlich zur Abbremsung infolge der druckabhängigen Molekularreibung im Vakuumraum - ermitteln. Dabei ist allerdings für mindestens einen bekannten Winkel die wirbelstrombedingte Abbremsung vorab experimentell bei hohem Vakuum und vernachlässigbarer Gasreibung zu bestimmen.

Für viele Anwendungszwecke ist es vereinfachend ausreichend, eine Meßeinrichtung einzusetzen, die zumindest zwei Neigungswinkel bestimmt, Patentanspruch 2, insbesondere die horizontale und vertikale Lage der Rotationsachse feststellt. Geeignete Meßeinrichtungen hierzu sind elektronische oder elektromechanische Wasserwaagen, deren Signale auf die Recheneinheit übertragen werden.

Eine weitere vorteilhafte Ausgestaltung der Erfindung besteht nach Patentanspruch 3 darin, die für den Gasreibungssensor bereits vorhandenen Antriebs- oder Stabilisierungsspulen zur Erfassung der gegebenen Neigung der Rotationsachse des Gasreibungssensors zu benutzen. Ein Verkippen der Meßkammerachse bewirkt nämlich aufgrund der Schwerkraft eine Auslenkung des Gasreibungssensors aus der Symmetrieachse der Spulenanordnung. Damit ändert sich der Abstand des Sensors zu den Spulen, z.B. zu den in Bezug zur Symmetrieachse jeweils paarweise angeordneten Antriebsspulen. Die sich dabei einstellenden differenziellen Änderungen der Spuleninduktivitäten sind ein Maß für den gegebenen Winkel zwischen der Vertikalen und der Rotationsachse und lassen sich so als Meßgrößen für die Ausrichtung der Rotationsachse benutzen, die der Recheneinheit als Korrekturgröße für die wirbelstrombedingte Abbremsung des Gasreibungssensors bei einer Schräglage aufgeschaltet werden können.

Die schwerkraftbedingte Auslenkung des Gasreibungssensors aus der Symmetrieachse der Magnet- und Spulenanordnung des Gasreibungsvakuummeters macht sich auch im elektrischen Regelkreis für die elektromagnetische Stabilisierung des Gasreibungssensors bemerkbar. Beim Verkippen der Rotationsachse gegen die Vertikale wird in Abhängigkeit vom Winkel auch die Komponente der Schwerkraft, die auf den Gasreibungssensor wirkt, entlang der Symmetrieachse verringert. Dabei verstimmt sich der Nullpunkt der Stabilisierungselektronik. Die Größe dieser Verstimmung erzeugt in der Regelelektronik eine dem Sinus des Kippwinkels proportionale Spannung, die der Recheneinheit als Korrektursignal aufgegeben werden kann, Patentanspruch 4. Die Korrektur des durch die Abbremsung des Gasreibungssensors angezeigten Wertes hinsichtlich der allein wirbelstrombedingten Abbremsung erfolgt entsprechend den oben bereits angegebenen Rechengrößen.

Statt die Auslenkung des Gasreibungssensors aus der Symmetrieachse lediglich zu registrieren und entsprechende Korrektursignale zu erzeugen, ist es in manchen Fällen notwendig, die gegebene koaxiale Position des Gasreibungssensors beizuhalten, insbesondere um Berührungen des Gasreibungssensors mit der Wand des Meßraums zu vermeiden. In vorteilhafter Weise geschieht dies gemäß Patentanspruch 5 mit Hilfe von Antriebsspulen, deren Achse mit der Meßkammerachse übereinstimmen. Bei einer Anordnung der Antriebsspulen als Spulenpaar lassen sich die Antriebsspulen dann so schalten, daß eine Abweichung des Gasreibungssensors von seiner Mittenposition in der Meßkammer erfaßt und über einen Regelkreis, wie auch für die elektromagnetische Lagestabilisierung des Gasreibungssensors benutzt wird, auf den Gasreibungssensor eine rückstellende Kraft ausgeübt wird. Die Information über die Schräglage der Rotationsachse, die für die Meßwertkorrektur des Gasreibungssensors notwendig ist, kann dann aus der für die Rückstellung des Gasreibungssensors aufzubringenden elektrischen Leistung ermittelt werden.

Die Erfindung wird nachfolgend anhand eines in der Zeichnung schematisch wiedergegebenen Ausführungsbeispiels näher erläutert. Die Figuren zeigen im einzelnen:
- Figur 1: perspektivischer Schnitt eines Meßkopfes eines Gasreibungsvakuummeters mit kugelförmigem Gasreibungssensor;
- Figur 2: Schaltbild für die der Rechnereinheit aufzugebenden Signale.

Die Zeichnung zeigt einen Meßkopf 1 mit kugelförmigem Gasreibungssensor 2 in einem dünnwandigen Metallrohr 3, das an einen Vakuumraum 4, dessen Vakuum zu messen ist, vakuumdicht befestigt und zum Vakuumraum 4 hin stirnseitig geöffnet ist. Die entgegengesetzte Stirnseite des Metallrohres 3 ist mit einer Abdeckung 5 vakuumdicht verschlossen. Auf das Metallrohr 3 ist der Meßkopf 1 mit senkrecht zur Rohrachse 6 des Metallrohrs 3 verlaufender Symmetrieachse 7 aufschiebbar.

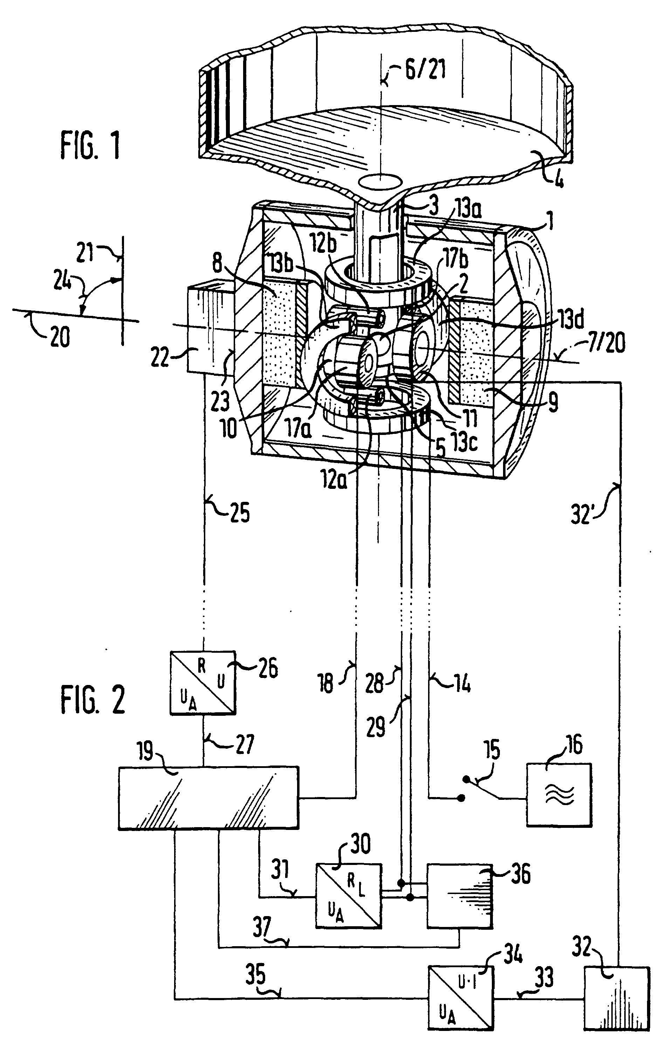

Die berührungslose Lage des aus magnetisierbarem Material gefertigten Gasreibungssensors 2 wird mittels zweier Permanentmagnete 8, 9 und zweier regelbarer elektrischer Stabilisierungsspulen 10, 11 erzeugt, die in Bezug auf die Symmetrieachse 7 paarweise gegenüberliegend angeordnet sind. Vier weitere, um den Gasreibungssensor 2 herum ebenfalls paarweise angeordnete elektrische Dämpfungsspulen 12 (in Figur 1 sind nur die Dampfungsspulen 12a, 12b sichtbar) sorgen für die Dämpfung von seitlichen Schwingungen des Gasreibungssensors.

Der Gasreibungssensor wird mittels vier paarweise angeordneten elektrischen Antriebsspulen 13 (in Figur 1 Antriebsspulen 13a bis 13d), die über eine elektrische Verbindungsleitung 14 und einen Schalter 15 mit einem Drehstromgenerator 16 verbindbar sind, rotierend angetrieben. Der Gasreibungssensor ist zentrisch zwischen den vier Antriebsspulen 13 im Metallrohr 3 angeordnet. Zur Erfassung der Drehzahl des Gasreibungssensors 2 dienen als Tastsensoren zwei Abtastspulen 17a, 17b. Bei einer Rotation des Gasreibungssensors wird in diesen Abtastspulen infolge der mit der Drehfrequenz des Rotationskörpers umlaufenden Magnetisierungskomponente eine drehzahlsynchrone elektrische Spannung induziert, die über eine an den Abtastspulen angeschlossene Signalleitung 18 einer Rechnereinheit 19 aufgeschaltet wird. Die Rechnereinheit 19 ermittelt die zeitliche Änderung der Drehfrequenz des Rotationskörpers 2, woraus sich der im Vakuumraum 4 herrschende Druck des den Rotationskörper umgebenden Gases berechnen läßt.

Am Meßkopf 1 befindet sich als Meßeinrichtung für die Neigung von Rotationsachse 20, die im Ausführungsbeispiel mit der Symmetrieachse 7 des Meßkopfes 1 zusammenfällt, gegen die Vertikale 21, die in Figur 1 von der vertikal ausgerichteten Rohrachse 6 repräsentiert ist (die Rohrachse 6 und die Symmetrieachse 7 sind deshalb zusätzlich mit Bezugszeichen 21 bzw. 20 markiert), ein Winkelsensor 22, der im Ausführungsbeispiel am äußeren Meßkopfgehäuse an einer Gehäusefläche 23 des Meßkopfes 1 derart angebracht und justiert ist, daß mit Hilfe des Winkelsensors ein der Neigung entsprechender Neigungswinkel 24 zwischen Rotationsachse 20 und raumfester Vertikalen 21 bestimmbar ist. Der Neigungswinkel 24 zwischen Rotationsachse 20 und Vertikalen 21 beträgt im Ausführungsbeispiel 90°.

Der Winkelsensor 22 ist über eine Signalleitung 25 mit dem Eingang eines Spannungswandlers 26 verbunden, dessen Ausgang über eine Signalleitung 27 zur Rechnereinheit 19 führt. Im Spannungswandler 26 werden die vom Winkelsensor 22 abgegebenen Signale (Spannungswert U oder Widerstandswert R) in eine Signalspannung U_{α} transformiert und der Rechnereinheit 19 aufgeschaltet.

Anstelle des Winkelsensors 22 sind als Meßeinrichtung und Signalgeber für den Neigungswinkel 24 auch eine oder mehrere der elektrischen Spulen zur Abtastung der Lage des Gasreibungssensors 2, zu dessen Stabilisierung, Dämpfung oder zu seinem Antrieb nutzbar. Im Ausführungsbeispiel wird von den Antriebsspulen 13a und 13b über Signalleitungen 28, 29 der Wechselstromwiderstand abgegriffen, dessen differenzielle Änderung im Spannungswandler 30 in eine sich proportional mit dem Neigungswinkel 24 verändernde Signalspannung U_{α} umgewandelt wird. Vom Spannungswandler 30 führt eine Signalleitung 31 zur Rechnereinheit 19.

Desweiteren wird im Ausführungsbeispiel als Anzeige für den gegebenen Neigungswinkel 24 die winkelabhängige Verstimmung eines elektrischen Reglers 32 genutzt, der zur Ausrichtung und Zentrierung des Rotationskörpers 2 dient. Der elektrische Regler 32 weist einen Regelkreis auf, der die Leistung minimiert, die den elektrischen Stabilisierungsspulen 10, 11 über eine Reglerleitung 32' zugeführt wird. Die Korrekturleistung, die zur Korrektur der Lage des Gasreibungssensors 2 innerhalb des Metallrohres 4 erforderlich ist, ist dem Neigungswinkel 24 zwischen der Rotationsachse 20 und der Vertikalen 21 proportional und kann somit vom Regler 32 über eine Signalleitung 33 einem entsprechenden Spannungswandler 34 zugeführt werden. Der Spannungswandler 34 transformiert die elektrische Korrekturleistung in eine entsprechende Signalspannung U_{α}, die über eine Signalleitung 35 der Rechnereinheit 19 aufgeschaltet wird.

Eine weitere Alternative zur Bestimmung des Neigungswinkels 24 besteht darin, mit Hilfe der Spulenquartette 12 und 13 eine von der Neigung der Rotationsachse 20 gegen die Vertikale 21 unabhängige zentrierte Position des Gasreibungssensors 2 im Metallrohr 3 aufrechtzuerhalten. Im Ausführungsbeispiel wird von den Antriebsspulen 13 die Position des Gasreibungssensors 2 induktiv erfaßt und über die mit ihnen verbundenen Signalleitungen 28, 29 auf einen Regler 36 übertragen. Der Regler 36 und der Spannungswandler 30 sind im Ausführungsbeispiel alternativ mit den Signalleitungen 28, 29 verbindbar. Vom Regler 38 wird die Abweichung des Gasreibungssensors 2 von seiner vorgegebenen Sollposition auf der Symmetrieachse 7 zwischen den Spulen 13 bestimmt und entsprechend der Abweichung ein Regelstrom zur Zurückstellung des Gasreibungssensors 2 erzeugt. Als Stromleiter dienen die Signalleitungen 28, 29. Eine dem Regelstrom proportionale Spannung wird vom Regler 36 über eine Signalleitung 37 auch der Rechnereinheit 19 als winkelproportionales Signal übertragen.

In den drei zuletzt beschriebenen Ausführungsführungsbeispielen ist die Winkelerfassung ohne eine Änderung des bisher bekannten Meßkopfaufbaus möglich.

## Patentansprüche

1. Gasreibungsvakuummeter mit um eine ortsfeste Rotationsachse rotierendem Gasreibungssensor (2), der innerhalb einer evakuierbaren Meßkammer (3), die mit dem Vakuumraum, dessen Vakuum zu messen ist, räumlich verbindbar ist, mittels eines in Bezug auf die Rotationsachse (20) rotationssymmetrischen und regelbaren Magnetfeldes berührungslos gelagert ist,
**dadurch gekennzeichnet**,
daß die Rotationsachse (20) eine von der Vertikalen (21) abweichende, vorzugsweise horizontale Ausrichtung aufweist, und eine die Neigung (24) der Rotationsachse (20) gegen die Vertikale (21) messende Meßeinrichtung (22) vorgesehen ist, deren Ausgangssignal zur Korrektur des angezeigten Druckwertes dient, wobei die Korrekturgröße in Abhängigkeit von einem zumindest für einen Neigungswinkel vorab experimentell bestimmten wirbelstrombedingten Abbremsungswert des Gasreibungssensors ermittelbar ist.

2. Gasreibungsvakuummeter nach Anspruch 1,
**dadurch gekennzeichnet,**
daß die Meßeinrichtung (22) eine elektronische oder elektromechanische Wasserwaage ist.

3. Gasreibungsvakuummeter nach Anspruch 1,
**dadurch gekennzeichnet,**
daß als Meßeinrichtung zur Messung der Neigung der Rotationsachse (2) gegen die Vertikale (21) Stabilisierungs-, Dämpfungs-, Antriebs- und/oder Abtastspulen (10, 11, 12, 13, 17) des Gasreibungssensors (2) genutzt werden.

4. Gasreibungsvakuummeter nach Anspruch 1 oder 2,
**dadurch gekennzeichnet**,
daß eine infolge der schwerkraftbedingten Lageveränderung des Gasreibungssensors (2) auftretende Verschiebung des Arbeitspunktes einer elektronischen Magnetlager-Stabilisierung als Meßsignal für die Neigung (24) verwendet wird.

5. Gasreibungsvakuummeter nach einem der vorhergehenden Ansprüche,
**dadurch gekennzeichnet**,
daß die schwerkraftbedingte Lageveränderung des Gasreibungssensors (2) durch Magnetfelder, die permanentmagnetisch oder elektromagnetisch, vorzugsweise mit Hilfe der vorhandenen Stabilisierungs- oder Antriebs-Spulen (10, 11, 13) erzeugt werden, korrigiert und der erforderliche Korrekturstrom als Meßgröße für die Neigung (24) verwendet wird.

## Claims

1. Gas friction vacuum gauge comprising a gas friction sensor (2), which rotates around a spatially fixed spinning axis and which is mounted free of contact within an evacuatable measuring chamber (3), which is spatially connectable to the vacuum space the vacuum of which is to be measured, by means of a magnetic field which is rotary-symmetrical relative to the spinning axis and controllable, **characterised in that** the spinning axis (20) comprises a preferably horizontal alignment which deviates from the vertical (21) and a measuring device (22) which measures the inclination (24) of the spinning axis (20) relative to the vertical (21) the output signal of which serves to correct the displayed pressure value, and the extent of correction is determined in dependence of a whirl-flow related retarding value of the gas friction sensor which is experimentally predetermined at least for an inclination angle.

2. Gas friction vacuum meter according to Claim 1, **characterised in that** the measuring device (22) is an electronic or electromechanical water level.

3. Gas friction vacuum meter according to Claim **1, characterised in that** stabilising, dampening, drive and or sensor coils (10, 11, 12, 13, 17) of the gas friction sensor (2) are utilised as measuring device for measuring the inclination of the spinning axis (2) relative to the vertical (21).

4. Gas friction vacuum meter according to Claim 1 or 2, **characterised in that** a displacement of the operational point of an electronic magnet-mount stabilisation due to gravity related change in position of the gas friction sensor (2) is utilised as a measuring signal for the inclination (24).

5. Gas friction vacuum meter according to one of the above claims, **characterised in that** the change in position of the gas friction sensor (2) due to gravity is corrected by magnetic fields which are permanent-magnetically or electro-magnetically generated, preferably with the aid of present stabilisation and drive coils (10, 11, 13), and the required correcting current is used as a measuring value for the inclination (24).

## Revendications

1. Indicateur de vide à frottement de gaz, comportant un capteur (2) par frottement de gaz qui tourne par rapport à un axe de rotation à poste fixe et qui est monté sans contact au moyen d'un champ magnétique symétrique de révolution par rapport à l'axe (20) de rotation et pouvant être réglé à l'intérieur d'une chambre (3) de mesure dans laquelle on peut faire le vide et qui peut communiquer dans l'espace avec la zone sous vide dont le vide est à mesurer, caractérisé en ce que l'axe (20) de rotation a une orientation s'écartant de la verticale (21), de préférence horizontale, et en de qu'il est prévu un dispositif (22) de mesure qui mesure l'inclinaison (24) de l'axe (20) de rotation par rapport à la verticale (21) et dont le signal de sortie sert à corriger la valeur de pression indiquée, la grandeur de correction pouvant être déterminée en fonction d'une valeur de ralentissement du capteur par frottement de gaz qui est déterminée à l'avance de manière expérimentale au moins pour un angle d'inclinaison et qui est due à des courants de Foucault.

2. Indicateur de vide à frottement de gaz suivant la revendication 1, caractérisé en ce que le dispositif (22) de mesure est un niveau à bulle d'air électronique ou électromécanique.

3. Indicateur de vide à frottement de gaz suivant la revendication 1, caractérisé en ce qu'il est utilisé comme dispositif de mesure pour la mesure de l'inclinaison de l'axe (2) de rotation par rapport à la verticale (21) des bobines (10, 11, 12, 13, 17) de stabilisation, d'amortissement, d'entraînement et/ou de détection du capteur (2) par frottement de gaz.

4. Indicateur de vide à frottement de gaz suivant la revendication 1 ou 2, caractérisé en ce qu'il est utilisé comme signal de mesure pour l'inclinaison (24) un déplacement du point de travail d'une stabilisation électronique par palier magnétique apparaissant à la suite d'une variation de position due à la force de gravité du capteur (2) par frottement de gaz.

5. Indicateur de vide à frottement de gaz suivant l'une des revendications précédentes, caractérisé en ce que la variation de position due à la force de gravité du capteur (2) par frottement de gaz est corrigée par des champs magnétiques qui sont produits par des aimants permanents ou de manière électromagnétique, de préférence à l'aide des bobines (10, 11, 13) de stabilisation ou d'entraînement présentes, et en ce que le courant de correction nécessaire est utilisé comme grandeur de mesure pour l'inclinaison (24).
